(19) Europäisches Patentamt
European Patent Office
Office européen des brevets

(11) **EP 2 161 473 A2**

(12) **EUROPÄISCHE PATENTANMELDUNG**

(43) Veröffentlichungstag:
**10.03.2010 Patentblatt 2010/10**

(51) Int Cl.:
***F16F 7/10*** *(2006.01)*     ***F16F 15/00*** *(2006.01)*

(21) Anmeldenummer: **09011478.6**

(22) Anmeldetag: **08.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **09.09.2008 DE 102008046457**

(71) Anmelder: **Deutsches Zentrum für Luft- und Raumfahrt e.V.**
**51147 Köln (DE)**

(72) Erfinder:
• **Melcher, Jörg**
**38165 Groß Brunsrode (DE)**
• **Schröter, Christoph**
**38104 Braunschweig (DE)**
• **Fingerhut, Daniel**
**38321 Denkte (DE)**

(74) Vertreter: **Plöger, Jan Manfred et al**
**Gramm, Lins & Partner GbR**
**Theodor-Heuss-Strasse 1**
**38122 Braunschweig (DE)**

(54) **Schwingungsgedämpftes Bauteil**

(57) Die Erfindung betrifft ein Schwingungsgedämpftes Bauteil mit einer Grundstruktur (12) und einer mit der Grundstruktur (12) verbundenen elektrischen Schaltung (14), wobei die elektrische Schaltung (14) mindestens zwei elektrisch von einander getrennte piezoelektrische Bauelemente (16,18) umfasst, die mechanisch in Reihe so mit der Grundstruktur (12) gekoppelt sind, dass eine Schwingung der Grundstruktur (12) dazu führt, dass eine elektrische Spannung in den piezoelektrischen Bauelementen (16,18) induziert wird, und eine erste Induktivität (30) und mindestens eine zweite Induktivität (32) aufweist. Erfindungsgemäß ist die elektrische Schaltung ein Tilger (14) und die erste Induktivität (30) und die mindestens eine zweite Induktivität (32) mit den piezoelektrischen Bauelementen (16,18) sind so verbunden, dass sich ein elektrischer Zwei-Kreis-Resonanzabsorber ergibt.

Fig. 2

EP 2 161 473 A2

**Beschreibung**

Die Erfindung betrifft ein schwingungsgedämpftes Bauteil mit (a) einer Grundstruktur und (b) einem mit der Grundstruktur verbundenen Tilger.

Ein derartiges schwingungsgedämpftes Bauteil ist beispielsweise aus der DE 10 2004 030 701 B4 bekannt. Nachteilig an einem derartigen schwingungsgedämpften Bauteil ist, dass der Tilger eine Schwingung der Grundstruktur zwar bei der Eigenfrequenz der Grundstruktur gut dämpfen kann. Ändert sich diese Eigenfrequenz jedoch, beispielsweise weil die Grundstruktur sich thermisch anders ausdehnt als der Tilger, so kann die schwingungsdämpfende Wirkung des Tilgers deutlicher abgeschwächt sein. Das läuft der Forderung zuwider, dass der Tilger Schwingungen der Grundstruktur unter möglichst allen Umweltbedingungen sicher dämpfen kann. In anderen Worten führt der Tilger zu einer sehr schmalbandigen Schwingungsreduktion um die Eigenfrequenz der Grundstruktur.

Es ist ein weiterer Nachteil, dass herkömmliche Tilger um ihre Resonanzfrequenz bzw. Eigenfrequenz Überhöhungen aufweisen, die nur auf Kosten der Effizienz bei der Tilgerfrequenz reduziert werden können. In anderen Worten reduziert der Tilger die Schwingung der Grundstruktur bei der Eigenfrequenz der Grundstruktur zwar sehr effektiv, bei benachbarten Frequenzen jedoch sehr ineffizient.

Es ist ein weiterer Nachteil, dass bei den bekannten mechanischen Tilgern beträchtliche Massen eingesetzt werden müssen, was die Gesamtmasse des schwingungsgedämpften Bauteils erhöht und beispielsweise bei Fahrzeugen unerwünscht ist.

Bekannte aktive elektrische Tilgersysteme, beispielsweise gemäß der DE 602 14 329 T2, bei denen die Schwingung der Grundstrukturen erkannt und mit einer gegenphasigen Kraftanregung kompensiert werden, benötigen nachteiligerweise elektrische Energie für den Betrieb. Die elektrische Energie wird dabei entweder von externen Stromquellen geliefert, was zu einem zusätzlichen Bedarf an Bauteilen und damit zur Erhöhung der Gesamtmasse des schwingungsgedämpften Bauteils führt. Oder sie wird durch Piezoelemente, die auf der schwingenden Grundstruktur angeordnet sind, erzeugt. Nachteilig an letztgenannter Lösung ist zum einen, dass die Energie kurzfristig zwischengespeichert werden muss und damit ebenfalls zusätzliche Bauteile erforderlich sind. Und weiterhin das Tilgersystem ein nachteiliges Kaltstartverhalten aufweißt, d.h. bis zur Aufladung des Zwischenspeichers nicht die gleiche Schwingungsdämpfüngswirkung vorhanden ist, wie im aufgeladenen Zustand. Dies führt zu unsicheren Prozessen und einem erhöhten Mess- und Steuerungsumfang inkl. zusätzlicher Sensoren, Stellglieder und Regler.

Aus der DE 689 30 891 T2 ist ein passives elektrisches Tilgersystem bekannt, das zusätzliche elektrische Schaltungen erfordert, um einen breiten Dämpfungsbereiches zur erreichen. Die bei dissipativen Schaltungen verwendeten ohmschen Widerstände, weisen aber meist einen anderen Temperaturkoeffizienten auf, als die zu dämpfende Grundstruktur. Daher hängt die Dämpfungswirkung dieser passiven elektrischen Schaltungen erheblich von einer Temperaturänderung ab.

Der Erfindung liegt die Aufgabe zugrunde, Nachteile im Stand der Technik zu überwinden.

Die Erfindung löst das Problem durch ein gattungsgemäßes schwingungsgedämpftes Bauteil, bei dem der Tilger mindestens zwei elektrisch voneinander getrennte Piezoelektrische Bauelemente umfasst, die mechanisch in Reihe mit der Grundstruktur gekoppelt sind, so dass eine Schwingung der Grundstruktur dazu führt, dass eine elektrische Spannung in dem piezoelektrischen Bauelement induziert wird, und eine erste Induktivität und mindestens eine zweite Induktivität umfasst, die mit den piezoelektrischen Bauelementen so verbunden sind, dass sich ein elektrischer Zwei-Kreis-Resonanzabsorber ergibt.

Vorteilhaft an der Erfindung ist, dass der Tilger Schwingungen der Grundstruktur in einem weiten Bereich um die Resonanzfrequenz bzw. Eigenfrequenz dämpfen kann. Auch Änderungen der Temperatur oder sonstiger Umweltbedingungen führen damit nicht zu einer Verminderung der Dämpfungswirkung.

Ein weiterer Vorteil ist, dass der Tilger ohne aktive Stellglieder auskommt und somit keine externe Energieversorgung benötigt. Es ist zudem möglich, einen derartigen Tilger mit einer sehr kleinen Masse herzustellen, so dass der Tilger beim Einsatz beispielsweise in Fahrzeugen zu im Wesentlichen keinem zusätzlichen Treibstoffverbrauch führt.

Im Rahmen der vorliegenden Beschreibung wird unter der Grundstruktur eine zu dämpfende Anordnung verstanden. Es kann sich dabei beispielsweise um eine Tragfläche, ein Maschinenelement, ein Fahrzeugteil oder eine sonstige beliebige Komponente, beispielsweise einer Maschine, eines Roboters oder eines Fahrzeugs handeln.

Unter dem Merkmal, dass der Tilger mit der Grundstruktur verbunden ist, ist insbesondere zu verstehen, dass der Tilger so dauerhaft mit der Grundstruktur gekoppelt ist, dass sich eine Schwingung der Grundstruktur in der Grundschwingung direkt auf den Tilger überträgt. Günstig ist, den Tilger so zur Grundstruktur anzuordnen, dass eine Grundschwingung der Grundstruktur entlang einer Achse erfolgt, die mit derjenigen Achse des Tilgers zusammenfällt, in der eine mechanische Bewegung zu einer besonders großen Induktion eines Stroms bzw. einer Spannung an einem oder an beiden piezoelektrischen Bauelementen führt.

Unter dem Merkmal, dass der Tilger zwei elektrisch voneinander getrennte piezoelektrische Bauelemente umfasst, ist insbesondere zu verstehen, dass die Bauelemente elektrisch voneinander trennbar sind. In der Regel sind die piezoelektrischen Bauelemente aber galvanisch gekoppelt. Die Bauelemente sind also in elektrischer Hinsicht eigenständig. Insbesondere sind die piezoelektrischen Bauelemente so ausgebildet, dass sie grundsätzlich mit unterschiedlicher Frequenz bzw. unterschiedlicher Phasenlage zueinander schwingen können. Dazu ist es möglich und vorteilhaft, nicht aber notwendig, dass die mindestens zwei piezoelektrischen Bauelemente räumlich voneinander beabstandet sind. Es ist beispielsweise auch möglich, dass die beiden piezoelektrischen Bauelemente in einem Bauteil zusammengefasst und zusammengefügt sind.

Unter einem Zwei-Kreis-Resonanzabsorber wird insbesondere eine elektrische Schaltung verstanden, bei der einem elektrischen Schwingkreis eine elektrische Siebkette parallel geschaltet ist. Die Bezeichnung Zwei-Kreis-Resonanzabsorber bezeichnet dabei eine entsprechende Schaltung, die mindestens zwei Systeme aus einer Kapazität einer Induktivität umfassen. Es ist auch möglich, dass mehr als zwei piezoelektrischen Bauelemente so verschaltet sind, dass sie einen Mehr-Kreis-Resonanzabsorber bilden. Es ist zudem möglich, dass der Zwei-Kreis-Resonanzabsorber Teil einer größeren elektrischen Schaltung ist, die auch aktive Bauteile umfassen kann, auch wenn dies aufwändiger und damit in der Regel weniger vorteilhaft ist.

Gemäß einer bevorzugten Ausführungsform umfasst mindestens eines der piezoelektrischen Bauelemente mindestens einen Waben-Piezoaktoren. Besonders vorteilhaft ist es, wenn alle piezoelektrischen Bauelemente derartige Waben-Piezoaktoren umfassen. Waben-Piezoaktoren weisen Ausnehmungen auf, aufgrund derer sie eine im Vergleich zu herkömmlichen Piezoaktoren kleinere Kapazität haben. Da die Eigenfrequenz proportional zu dem Inversen der Wurzel des Produkts aus Induktivität und Kapazität ist, erlaubt eine kleine Kapazität bei einer gegebenen zu tilgenden Frequenz eine größere Induktivität. Eine größere Induktivität führt ihrerseits zu einer höheren Energiedissipation und so zu besseren Dämpfungseigenschaften des Tilgers.

Besonders bevorzugt ist mindestens eines der piezoelektrischen Bauelemente ein piezoelektrischer Folienwandler. Derartige Folienwandler, die auch als Patch bezeichnet werden, besitzen zwei Längenausdehnungen, die beide jeweils groß sind gegenüber einer Dickenausdehnung des Folienwandlers. Beispielsweise sind beide Längenausdehnungen mindestens zehnmal so groß wie die Dickenausdehnung. Vorteilhaft hieran ist, dass derartige Folienwandler leicht herzustellen sind und eine hohe Lebensdauer aufweisen. Des Weiteren sind Folienwandler kostengünstig, so dass sie sich auch für Massenanwendungen eignen.

Bevorzugt umfasst der Tilger zumindest zwei flächig miteinander verbundene Folienwandler, wobei einer der Folienwandler mit der Grundstruktur flächig verbunden ist. Unter dem Merkmal, dass die mindestens zwei Folienwandler flächig miteinander verbunden sind, ist insbesondere zu verstehen, dass sie so aneinander gefügt sind, beispielsweise geklebt, dass sie sich in ihrer Dickenausdehnung aneinander anschließen. Das hat den Vorteil, dass der Tilger bezüglich der Grundstruktur nur wenig aufträgt, das heißt Platz sparend ist.

Eine besonders effektive Wirkung entfaltet der Tilger, wenn mindestens eine der mindestens zwei Induktivitäten ein magnetostriktives Element umfasst und mit der Grundstruktur so verbunden ist, dass eine Deformation des magnetostriktiven Elements die Schwingung der Grundstruktur dämpft. Magnetostriktive Elemente verformen sich, wenn ein äußeres magnetisches Feld angelegt wird. Es wird so eine verstärkte Dämpfung des Tilgers erreicht.

Vorzugsweise ist das schwingungsgedämpfte Bauteil ein Sportgerät, insbesondere ein Tennisschläger, ein Golfschläger oder ein Ski. Sportgeräte umfassen in der Regel keine elektrischen Energiequellen, so dass sich passive Tilger besonders gut für den Einsatz in Sportgeräten eignen.

Vorteilhaft ist zudem, wenn das schwingungsgedämpfte Bauteil Teil einer Mikropositioniervorrichtung ist. Die Erfindung ist jedoch auf diese Anwendung nicht beschränkt. Weitere Beispiele für erfindungsgemäße schwingungsgedämpfte Bauteile sind Brücken, Fahrzeuge, wie beispielsweise Automobile, Züge oder Flugzeuge, Robotersysteme oder Raumfahrtsysteme. Günstig ist zudem, das schwingungsgedämpfte Bauteil als Teil eines Fernrohrs oder Feldstechers zu benutzen, um Schwingungen am Prismen-Umkehrsystem innerhalb zu dämpfen, die von einer aktiven Nachführung (Anti-Verwackelschaltung) hervorgerufen werden.

Im Folgenden wird die Erfindung anhand exemplarisch bevorzugter Ausführungsformen in Bezug auf die beigefügten Zeichnungen näher erläutert. Dabei zeigt

Figur 1a    eine schematische Ansicht eines erfindungsgemäßen Bauteils im unbelasteten Zustand,

Figur 1b    die piezoelektrischen Bauteile des Tilgers gemäß Figur 1 a im belasteten Zustand,

Figur 2     eine schematische Ansicht einer zweiten Ausführungsform eines erfindungsgemäßen Bauteils und

Figur 3a    eine schematische Darstellung einer weiteren Ausführungsform eines erfindungsgemäßen Bauteils mit $d_{31}$-Piezowandlern.

Figur 3b    zeigt das elektrische Schaltbild des Tilgers nach Figur 3a,

Figur 3c    zeigt das kombinierte elektrische/mechanische Schaltbild des Tilgers nach Figur 3a,

Figur 4        ist eine schematische Darstellung einer Ausführungsform eines erfindungsgemäßen Bauteils mit einer magnetostriktiven Induktivität,

Figur 5        ist eine schematische Darstellung einer zweiten Ausführungsform eines erfindungsgemäßen Bauteils mit einer magnetostriktiven Induktivität,

Figur 6        ist eine schematische Darstellung einer dritten Ausführungsform eines erfindungsgemäßen Bauteils mit einer magnetostriktiven Induktivität und die

Figuren 7a     und 7b zeigen Realteile bzw. Imaginärteile eines Tilgers eines erfindungsgemäßen Bauteils im Vergleich zu einem herkömmlichen Tilger.

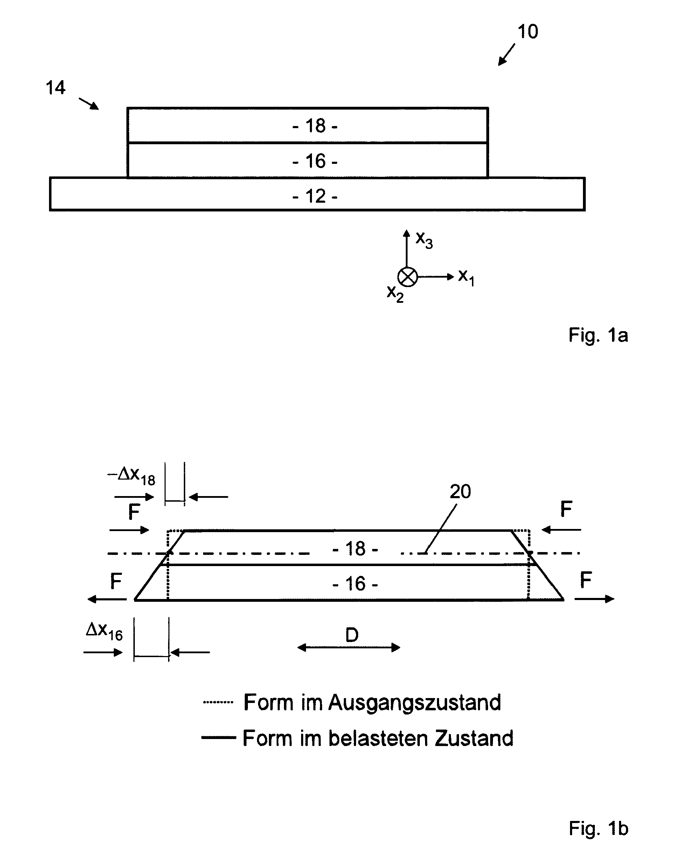

Figur 1a zeigt ein schwingungsgedämpftes Bauteil 10, das eine Grundstruktur 12 und einen mit der Grundstück 12 verbundenen Tilger 14 umfasst. Der Tilger 14 weist ein erstes piezoelektrisches Bauelement 16 und ein zweites piezoelektrisches Bauelement 18 auf, die Teil eines weiter unten beschriebenen elektrischen Schaltkreises sind.

Das piezoelektrische Bauelement 16 ist ein piezoelektrischer Folienwandler mit einer $d_{31}$-Ladungskonstante. Das bedeutet, dass eine mechanische Spannung, die in $x_1$-Richtung angelegt wird, zu einem elektrischen Feld in $x_3$-Richtung führt, wobei die $x_1$, $x_2$, und $x_3$-Richtung aufeinander senkrecht stehen und ein Rechtssystem bilden.

Figur 1b zeigt das erste piezoelektrische Bauteil 16 und das zweite piezoelektrische Bauteil 18 im belasteten Zustand, das heißt, wenn Kräfte F auf die beiden Bauteile 16, 18 wirken. Mit einer gestrichelten Linie ist der Formausgangszustand gezeigt, wohingegen die Form im belasteten Zustand mit einer durchgezogenen Linie gekennzeichnet ist. Die Strichpunkt-Linie zeigt die Lage einer neutralen Faser 20.

Die Bauteile 16 und 18 sind piezoelektrische Folienwandler (Patches), die in Figur 1b eine Dehnung in einer Dehnungsrichtung D erfahren. Dabei erfährt der erste piezoelektrische Folienwandler 16 eine Querdehnung $\Delta x_{16}$ und der zweite piezoelektrische Folienwandler eine Querdehnung $\Delta x_{18}$. Die Querdehnungen $\Delta x_{16}$ und $\Delta x_{18}$ unterscheiden sich betragsmäßig und im Vorzeichen voneinander, die Kräfte F sind hingegen gleich. Die in Figur 1b gezeigte Kopplung der beiden piezoelektrischen Bauteile 16, 18 ist mechanisch seriell.

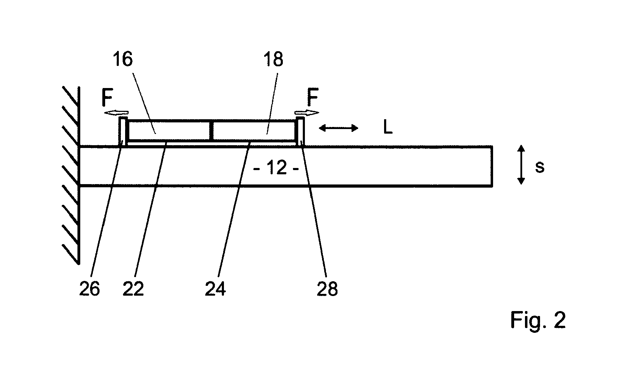

Figur 2 zeigt eine alternative Ausführungsform für eine mechanisch serielle Kopplung der piezoelektrischen Folienwandler 16, 18, die an jeweils zwei Schmalseiten miteinander verbunden und so mechanisch gekoppelt sind. Die Grundstruktur 12 schwingt quer zu ihrer Längsrichtung L. Die beiden Folienwandler 16, 18 sind an ihren Auflageflächen 22 bzw. 24 nicht mit der Grundstruktur 12 verbunden, sondern über Befestigungselemente 26 bzw. 28 mit der Grundstruktur 12, die im vorliegenden Fall ein Liegebalken ist, gekoppelt. Die piezoelektrischen Bauteile 16, 18 stützen sich über die Befestigungselemente 26, 28 an der Grundstruktur 12 ab und bei Biegung der Grundstruktur 12 entsteht an ihnen eine beitragsgleiche Kraft. Die Querdehnungen der Bauteile 16, 18 bei Biegung der Grundstruktur 12 sind unterschiedlich. Alternativ zu piezoelektrischen Bauteilen, die $d_{31}$-Wandler sind, können auch $d_{33}$-Wandler und/oder $d_{15}$-Wandler eingesetzt werden.

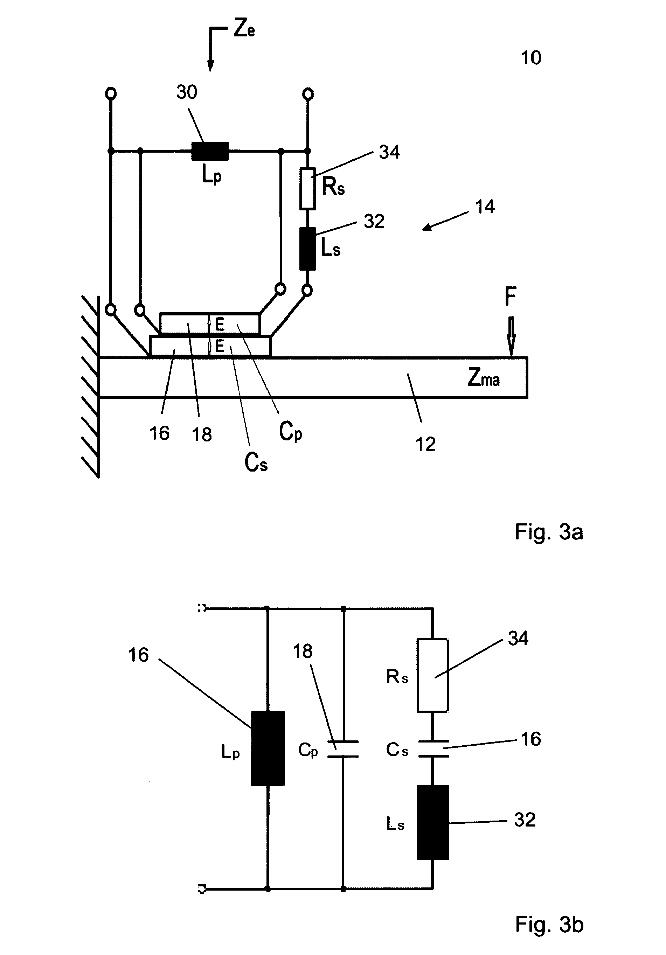

Figur 3a zeigt ein erfindungsgemäßes Bauteil 10, bei dem auf der Grundstruktur 12, die eine mechanische Impedanz $\underline{Z}_{m\alpha}$ ist, das erste piezoelektrische Bauteil 16 und das zweite piezoelektrische Bauteil 18 aufgeklebt sind. Zeichen, die einen Unterstrich tragen, sind komplexwertig. Dabei hat das erste piezoelektrische Bauteil 16 eine elektrische Kapazität $C_s$ und das zweite piezoelektrische Bauteil 18 die Kapazität $C_p$. Die beiden piezoelektrischen Bauteile 16, 18 sind so angeordnet und miteinander verschaltet, dass beim Aufbringen der Kraft F auf die Grundstruktur 12 und damit einhergehender Verformung die induzierten Felder E in vektoriell in die gleiche Richtung zeigen.

Die piezoelektrischen Bauteile 16, 18 sind mit einer ersten Induktivität 30 und einer zweiten Induktivität 32 elektrisch verbunden, so dass sich zusammen mit einem elektrischen Widerstand 34 ein Zwei-Kreis-Resonanzabsorber ergibt, der Teil des Tilgers 14 ist.

Figur 3b zeigt die Schaltung aus Figur 3a als elektrisches Ersatzschaltbild. Es ist zu erkennen, dass die als Kapazität fungierenden piezoelektrischen Bauteile 16, 18 zusammen mit den Induktivitäten 30, 32 in Form von Spulen und dem Widerstand 34 einen Zwei-Kreis-Resonanzabsorber ergeben. Dieser besitzt eine Eigenkreisfrequenz $\omega_0$, die einer Eigenkreisfrequenz der Grundstruktur 12 (Figur 3a) entspricht. Die Kopplung der piezoelektrischen Bauteile 16, 18 in Reihe entspricht einer elektrischen Parallelschaltung.

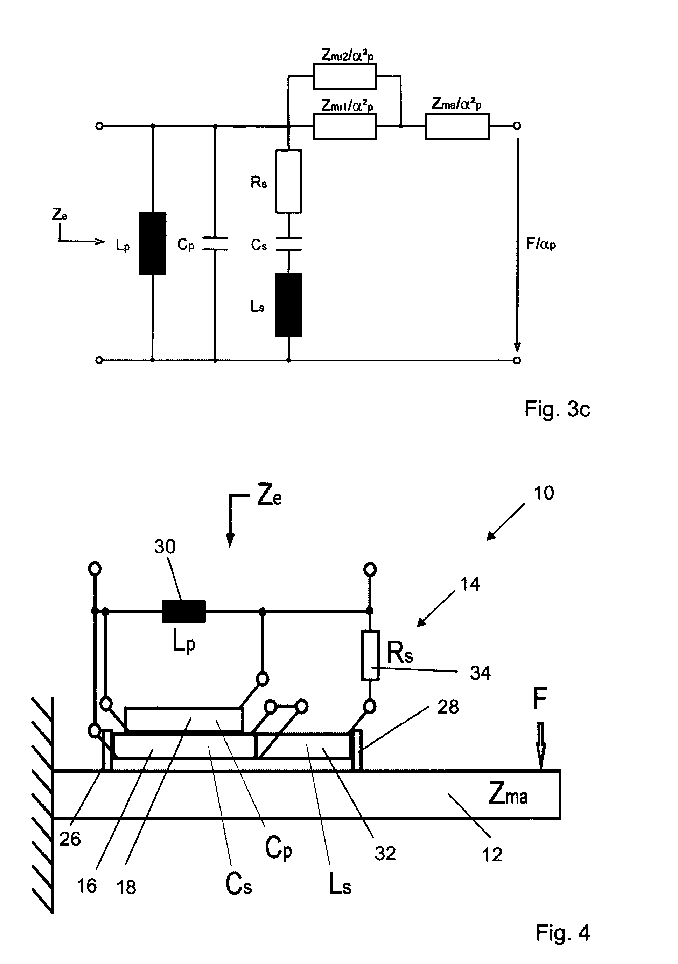

Figur 3c zeigt das kombinierte elektrische/mechanische Schaltbild gemäß Figur 3b, das gegenüber Figur 3b um das mechanische Schaltbild ergänzt ist. Es gilt

$$F = \alpha_p\, U \tag{1}$$

$$v = \frac{1}{\alpha_p} I$$

(2),

wobei U die elektrische Spannung ist, I der elektrische Strom, v die Schnelle bzw. die Geschwindigkeit und $\alpha_p$ die Wandlerkonstante des Piezowandlers.

Figur 4 zeigt eine weitere Ausführungsform eines erfindungsgemäßen Bauteils 10, bei dem der Tilger 14 als zweite Induktivität 32 einen magnetostriktiven Wandler aufweist. Dieser ist mit dem ersten piezoelektrischen Bauteil (16) in Form eines Piezo-Stapels mechanisch in Serie geschaltet. Der magnetostriktive Wandler und der Piezo-Stapel stützen sich beide nur auf den Seitenbefestigungselementen 26, 28 ab und sind auf diese Weise mit der Grundstruktur 12 gekoppelt. Die beiden piezoelektrischen Bauteile 16, 18 sind miteinander starr verbunden, so das sie mechanisch seriell gekoppelt sind. Wie in der Ausführungsform gemäß Figur 3a umfasst der Tilger 14 zudem den Widerstand 34.

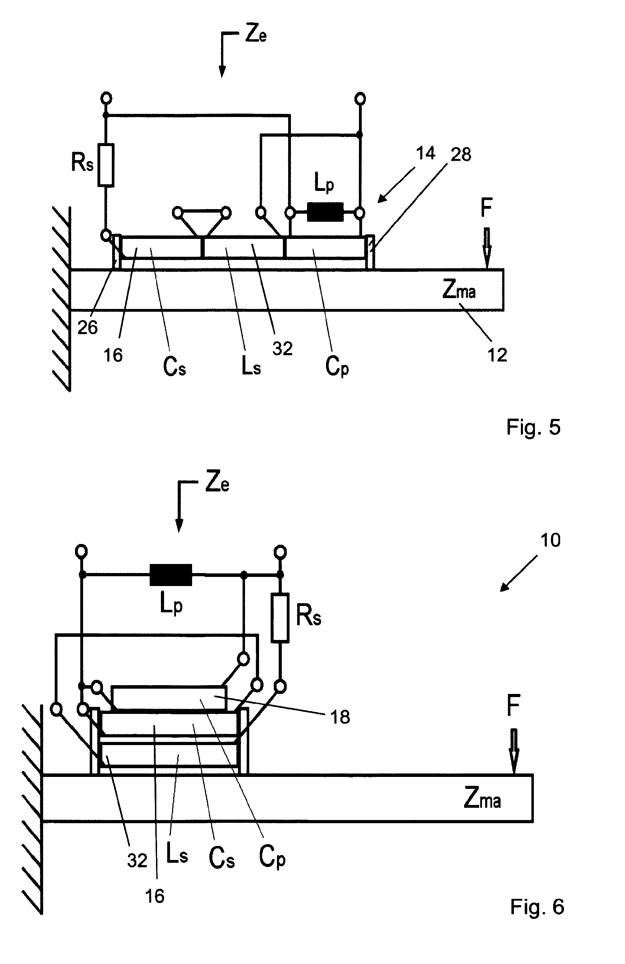

Figur 5 zeigt ein weiteres erfindungsgemäßes Bauteil 10, bei dem das erste piezoelektrische Bauteil 16, das zweite piezoelektrische Bauteil 18 und die zwischen beiden angeordnete zweite Induktivität hintereinander und parallel zur Grundstruktur 12 angeordnet sind. Dabei ist die Induktivität 32 zwischen den piezoelektrischen Bauteilen 16, 18 positioniert und steht mit beiden über eine Schmalseite in Kontakt. Kräfte werden über die Befestigungselemente 26 und 28 in die Bauteile 16, 18 und die Induktivität 32 eingeleitet. Die zweite Induktivität 32 ist ein magnetostriktiver Wandler, der aufgrund seiner Anordnung zusammen mit den piezoelektrischen Bauteilen 16, 18 einen Absorber des Tilgers 14 bildet.

Figur 6 zeigt eine weitere Ausführungsform eines erfindungsgemäßen Bauteils 10, bei der das erste piezoelektrische Bauteil 16 und die zweite Induktivität 32 in Form des magnetostriktiven Wandlers mechanisch parallel geschaltet sein kann, wohingegen das zweite piezoelektrische Bauteil 18 seriell geschaltet ist.

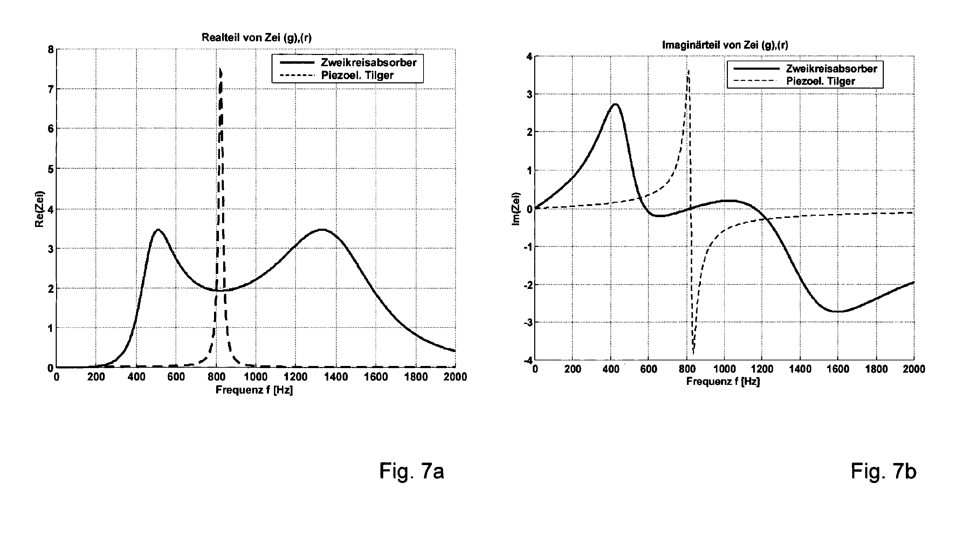

Figur 7a ist ein Diagramm, in dem der Realteil der elektrischen Impedanz $\underline{Z}_{ei}$ für einen rein piezoelektrischen Tilger und einen oben beschriebenen Zwei-Kreis-Resonanzabsorber dargestellt ist. Es ist zu erkennen, dass der rein piezoelektrische Tilger, der nur eine einzige Eigenfrequenz besitzt, zu einer besonders deutlichen Dämpfung in unmittelbarer Umgebung seiner Eigenfrequenz führt. Der Zwei-Kreis-Resonanzabsorber hingegen führt zu einer hohen Dämpfung in einem breiten Frequenzintervall.

Figur 7b zeigt den zugehörigen Imaginärteil der elektrischen Impedanz $\underline{Z}_{ei}$.

Das erfindungsgemäße schwingungsgedämpfte Bauteil kann in einer Vielzahl von Anwendungsgebieten eingesetzt werden. Beispielsweise kann das schwingungsgedämpfte Bauteil Teil eines Tennisschlägers sein. Es wurde festgestellt, dass aktive Schwingungsreduktionen an Tennisschlägern das Risiko für den Tennisellenbogen reduziert.

Das schwingungsgedämpfte Bauteil kann zudem ein Ski sein. Derartige Skier werden als ruhig beim Kurvenfahren und dennoch spritzig und drehfreudig beschrieben.

Ein weiteres Eingangsgebiet sind stark vergrößernde Ferngläser, die bei stativloser Benutzung häufig ein Wackelausgleichssystem besitzen. Optisch-analoge Systeme basieren auf einer batteriebetriebenen Aktoreinheit, die eine Schwingungskompensation am Prismenumkehrsystem für rotatorische Bewegungen durchführt. In den Frequenzbereichen von 0,2 bis 20 Hz können zwei helikal angeordnete Piezoaktorenpaare für einen Ausgleich ohne zusätzlichen Energieverbrauch sorgen. Gleichzeitig übernehmen diese Aktuatoren aufgrund ihrer Bauweise passive schwingungsisolierende Fehlereigenschaften. Es ist beispielsweise möglich, ein oder zwei der Induktivitäten in einem Gehäuse des Fernglases bzw. des sonstigen optischen Bauteils zu integrieren.

Das erfindungsgemäße schwingungsgedämpfte Bauteil kann zudem Teil einer Mikropositioniervorrichtung sein. Derartige Mikropositioniervorrichtungen umfassen häufig piezoelektrische Antriebe. Die Positionierung muss dabei nicht ausschließlich statisch, sondern auch dynamisch zur Kompensation auftretender Störschwingung erfolgen. Die erfindungsgemäßen Tilger auf Basis des Zwei-Kreis-Resonanzabsorbers können dabei schwingungsisolierten Labortischen, bei Motorstörungen, in der Halbleiterfertigung oder auch in Präzisionswerkzeugmaschinen zum Einsatz kommen.

**Bezugszeichenliste**

10    Bauteil
12    Grundstruktur
14    Tilger
16    erstes piezoelektrisches Bauteil

| | |
|---|---|
| 18 | zweites piezoelektrisches Bauteil |
| 20 | neutrale Faser |
| 22 | Auflagefläche |
| 24 | Auflagefläche |
| 26 | Befestigungselement |
| 30 | erste Induktivität |
| 32 | zweite Induktivität |
| 34 | Widerstand |
| $\alpha_p$ | Wandlerkonstante |
| d | Ladungskonstante |
| F | Kraft |
| D | Dehnungsrichtung |
| $\underline{Z}$ | Impedanz |
| $C_s$ | Kapazität |
| E | elektrisches Feld |
| $\omega_0$ | Eigenkreisfrequenz |
| U | Spannung |
| I | Strom |
| v | Schnelle, Geschwindigkeit |

**Patentansprüche**

1.  Schwingungsgedämpftes Bauteil mit

    (a) einer Grundstruktur (12) und
    (b) einer mit der Grundstruktur (12) verbundenen elektrischen Schaltung (14),
    (c) wobei die elektrische Schaltung (14)

    (i) mindestens zwei elektrisch von einander getrennte piezoelektrische Bauelement (16,18) umfasst, die mechanisch in Reihe so mit der Grundstruktur (12) gekoppelt sind, dass eine Schwingung der Grundstruktur (12) dazu führt, dass eine elektrische Spannung in den piezoelektrischen Bauelementen (16,18) induziert wird, und
    (ii) eine erste Induktivität (30) und mindestens eine zweite Induktivität (32) aufweist,
    **dadurch gekennzeichnet, dass**

    (d) die elektrische Schaltung ein Tilger (14) ist und
    (e) die erste Induktivität (30) und die mindestens eine zweite Induktivität (32) mit den piezoelektrischen Bauelementen (16,18) so verbunden sind, dass sich ein elektrischer Zwei-Kreis-Resonanzabsorber ergibt.

2.  Schwingungsgedämpftes Bauteil nach Anspruch 1, **dadurch gekennzeichnet, dass** mindestens eines der piezoelektrischen Bauelemente (16,18) einen Waben-Piezoaktor umfasst.

3.  Schwingungsgedämpftes Bauteil nach Anspruch 2, **dadurch gekennzeichnet, dass** mindestens eines der piezoelektrischen Bauelemente (16,18) einen piezoelektrischen Folienwandler umfasst.

4.  Schwingungsgedämpftes Bauteil nach einem der Ansprüche 2 oder 3, **dadurch gekennzeichnet, dass** der Tilger (14) zumindest zwei flächig miteinander verbundene Folienwandler umfasst und einer der Folienwandler mit der Grundstruktur (12) flächig verbunden ist.

5.  Schwingungsgedämpftes Bauteil nach einem der vorstehenden Ansprüche, **dadurch gekennzeichnet, dass** mindestens eine der mindestens zwei Induktivitäten (30, 32) ein magnetostriktives Element umfasst und mit der Grundstruktur (12) so verbunden ist, dass eine Deformation des magnetostriktiven Elements die Schwingung der Grundstruktur (12) dämpft.

6.  Schwingungsgedämpftes Bauteil nach einem der vorstehenden Ansprüche, **dadurch gekennzeichnet, dass** es ein Sportgerät, insbesondere ein Tennisschläger, ein Golfschläger oder ein Ski, ist.

7.  Schwingungsgedämpftes Bauteil nach einem der vorstehenden Ansprüche, **dadurch gekennzeichnet, dass** es eine Mikropositioniervorrichtung ist.

10

14

- 18 -

- 16 -

- 12 -

$$x_3$$
$$\otimes \longrightarrow x_1$$
$$x_2$$

Fig. 1a

$-\Delta x_{18}$

F

F

20

- 18 -

- 16 -

F

F

$\Delta x_{16}$

D

········ Form im Ausgangszustand

—— Form im belasteten Zustand

Fig. 1b

Fig. 2

Fig. 3a

Fig. 3b

Fig. 3c

Fig. 4

Fig. 5

Fig. 6

Fig. 7a

Fig. 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004030701 B4
- DE 60214329 T2
- DE 68930891 T2